# EUROPÄISCHE PATENTSCHRIFT

(11) **EP 0 807 491 B1**
(45) Veröffentlichungstag und Bekanntmachung des Hinweises auf die Patenterteilung: **20.01.1999**
(21) Anmeldenummer: 96107870.6
(22) Anmeldetag: 17.05.1996
(51) Int. Cl.: B24B 13/01, B24B 13/005

(54) **Halterung für optische Linsen und Verfahren zum Polieren von Linsen**
Support for optical lens and means polishing lens
Support pour lentille optique et procédé pour polir des lentilles

(43) Veröffentlichungstag der Anmeldung: 19.11.1997
(73) Patentinhaber: Opto Tech GmbH, 35435 Wettenberg (DE)
(72) Erfinder: Mandler, Roland, Dipl.-Ing., 35452 Heuchelheim (DE)
(74) Vertreter: Olbricht, Karl Heinrich, Dipl.-Phys.

(56) Entgegenhaltungen:
- EP-A- 0 169 931
- DD-A- 294 451
- JP-A- 7 299 720
- JP-A- 8 090 403
- US-A- 5 344 261
- PATENT ABSTRACTS OF JAPAN vol. 95, no. 008 & JP-A-07 205007 (HARUCHIKA SEIMITSU:KK), 8.August 1995,
- PATENT ABSTRACTS OF JAPAN vol. 95, no. 006 & JP-A-07 164297 (OLYMPUS OPTICAL CO LTD), 27.Juni 1995,

## Beschreibung

Die Erfindung betrifft eine Halterung für optische Linsen gemäß dem Oberbegriff von Anspruch 1 und ein Verfahren zum Polieren von Linsen gemäß dem Oberbegriff von Anspruch 15.

Zur Herstellung optischer Linsen sind mehrere Arbeitsschritte notwendig. Zunächst wird die Kontur der Linse durch Grobschleifen in einer oder mehreren Stufen aus einem vorgeformten Glasrohling herausgearbeitet. Eine oder mehrere Feinschleifstufen schließen sich an, wobei die Linse nahezu ihre endgültige Form erhält. Bei sphärischen Linsen sollte die Radiustoleranz nach dem Feinschleifen unter 1 bis 2 µm liegen. Das gleiche gilt für die Asphärizität. Für das Feinschleifen wird üblicherweise das Kugelschnittverfahren oder das Tangential-Topfschleifverfahren eingesetzt.

Nach dem Feinschleifen hat die Linsenoberfläche eine Rauhtiefe zwischen 3 und 8 µm, wodurch das auftreffende Licht in alle Richtungen stark gestreut wird. Um dies zu beseitigen, folgt ein Poliervorgang. Hierbei verwendet man Polierwerkzeuge mit Poliermittelträgern, z.B. Folien aus geschäumtem Polyurethan, die auf das Polierwerkzeug aufgeklebt werden. Der Poliermittelträger wird über die Oberfläche der zu polierenden Linse geführt, wobei sich zwischen den gleitenden Oberflächen ein Poliermittel befindet, das für den erforderlichen Polierabtrag sorgt.

Ursprünglich wurde mit dem Polieren lediglich die Rauhtiefe der Oberfläche verbessert. An die Genauigkeit der Linsengeometrie werden heute jedoch zunehmend höhere Anforderungen gestellt, so daß mit Hilfe des Poliervorgangs auch Korrekturen von Ungenauigkeiten im Radius einer Linse oder von Fehlern in der Asphärizität vorgenommen werden. Dies gilt insbesondere auch für industrielle Anwendungen. Dem Polieren kommt somit heute eine weit größere Bedeutung zu, als dies früher der Fall war, denn die endgültige, präzise Gestaltung von Linsen gegen Ende des Fertigungsvorgangs ist nur durch den Abtrag von Materialdicken kleiner 1 µm möglich. Eine außerordentlich genaue Linsengeometrie kann daher nur durch den Arbeitsvorgang Polieren erreicht werden. Alle anderen Fertigungsschritte sind zu grob, um Genauigkeiten im µm-Bereich zu erzielen. Dementsprechend kommt bei der modernen Linsenherstellung dem Polierwerkzeug eine ganz besondere Bedeutung zu; wird von ihm doch wesentlich die endgültige Form der Linse und damit die Qualität des Arbeitsergebnisses bestimmt.

Beim Poliervorgang wird naturgemäß nicht nur Material von der Oberfläche der zu bearbeitenden Linse abgetragen, sondern auch von der Oberfläche des Poliermittelträgers. Aus diesem Grund ist es erforderlich, den Poliermittelträger in regelmäßigen Abständen zu kontrollieren und gegebenenfalls nachzuarbeiten. Bei diesem sogenannten Abrichten ist höchste Genauigkeit gefordert, die nur durch besondere Maßnahmen erreicht werden kann.

Herkömmlich verwendet man zum Abrichten des Polierwerkzeugs separate Abrichtmaschinen mit speziellen Abrichtwerkzeugen wie z.B. diamantpelletbelegte Flächenwerkzeuge. Nachteilig dabei ist jedoch, daß das eigentliche Abrichtwerkzeug in einem aufwendigen Bearbeitungsprozeß zunächst in eine exakte Form gebracht werden muß, bevor der eigentliche Abrichtvorgang durchgeführt werden kann. Die Genauigkeit des Abrichtwerkzeugs hängt aber von der Genauigkeit der Bearbeitungswerkzeuge ab, deren Fehler sich leicht auf das Polierwerkzeug übertragen können.

Einfacher ist das Abrichten des Polierwerkzeugs mit einem sogenannten Topfwerkzeug, dessen Geometrie leicht kontrollierbar ist. Wie beispielsweise aus DD-A5-294 451 bekannt, besitzt eine solche Abrichtvorrichtung eine drehbar gelagerte und angetriebene Spindel zur Aufnahme des Topfwerkzeugs sowie eine zweite ebenfalls angetriebene Spindel zur Aufnahme des abzurichtenden Polierwerkzeugs. Die zweite Spindel mit dem Polierwerkzeug läßt sich translatorisch und in ihrer Winkellage zur ersten Spindel verstellen, so daß ein von den Arbeitsflächen des topfförmigen Abrichtwerkzeugs beschriebener Kreis so ausgerichtet werden kann, daß er durch den Drehmittelpunkt (Durchtrittspunkt der gedachten Drehachse durch die Oberfläche des Poliermittelträgers) verläuft. Bei richtiger Einstellung der Maschine muß außerdem der gedachte Schnittpunkt der beiden Drehachsen (Achse des Abrichtwerkzeugs und Achse des Polierwerkzeugs) mit dem Mittelpunkt der Kugelkalotte zusammenfallen, die von dem Poliermittelträger gebildet wird. Eine Zustellbewegung des Polierwerkzeugs längs seiner Achse ermöglicht es, die gesamte Oberfläche des Poliermittelträgers gleichmäßig zu bearbeiten.

Die zu bearbeitende Linse befindet sich in einer Poliermaschine mit einer geeigneten Linsenhalterung, die an einer angetriebenen Spindel unterhalb des Polierwerkzeugs befestigt ist. Der Linsenhalter hat, wie z.B. in EP-A1-0 169 931 beschrieben, einen zylindrischen Grundkörper mit einem Umfassungsring, einen auf dem Grundkörper aufsitzenden Membranhalter, eine daran festgelegte Membran aus elastischem Material sowie eine Kanalanordnung zur Zuführung bzw. Abführung von Luft. Die Membran unterstützt die in den Linsenhalter eingesetzte Linse und bildet zusammen mit dem Membranhalter einen Hohlraum. In diesen kann über die Kanalanordnung Druckluft eingelassen werden, so daß die auf der Membran aufsitzende Linse gleichmäßig gegen ein oberhalb der Linsenhalterung geführtes Bearbeitungswerkzeug gepreßt wird. Die Linsenhalterung sitzt auf einer angetriebenen Spindel und wird zum Polieren mittels eines Linearvorschubs gegen das Polierwerkzeug gefahren.

Die Verwendung einer separaten Abrichtmaschine hat selbst bei Verwendung moderner präziser Abrichtwerkzeuge den prinzipiellen Nachteil, daß durch den Wechsel des Polierwerkzeugs von der Abrichtmaschine auf die Poliermaschine die geforderte Genauigkeit in vielen Fällen nicht eingehalten werden kann. Selbst mit hohem technischen Aufwand in den Spanneinrichtungen ist es nicht möglich, beim Wechsel des Polierwerkzeugs von der Abrichtmaschine zur Poliermaschine die Geometriedaten genau zu reproduzieren. Hinzu kommt, daß das Arbeiten mit einer separaten Abrichtmaschine durch den Werkzeugwechsel viel Zeit erfordert und damit kostenintensiv ist.

Zur Vermeidung der genannten Nachteile beim Arbeiten mit einer Linsenpoliermaschine und einer separaten Abrichtmaschine wurden Maschinen und Verfahren entwickelt, bei denen das Abrichten des Polierwerkzeugs und das Polieren der Linsen in einer einzigen Maschine zusammengefaßt sind. Solche Maschinen verfügen über insgesamt drei angetriebene Spindeln. Eine obere Spindel nimmt das Polierwerkzeug auf, das mit dem Poliermittelträger nach unten zeigt. Eine unten liegende Spindel nimmt das Abrichtwerkzeug auf, das mit seinen Arbeitsflächen nach oben zeigt. Eine dritte, ebenfalls unten angeordnete Spindel trägt die Spannvorrichtung für die zu polierende Linse. Die beiden letztgenannten Spindeln sitzen auf einem Schlitten, der sich quer zu der ersten Spindel verfahren läßt, so daß sowohl das Abrichtwerkzeug wie auch die Spannvorrichtung mit der Linse unter das Polierwerkzeug gefahren werden können. Da die Achse des Polierwerkzeugs in einem gewissen Winkelbereich zur Senkrechten verstellt werden kann und auch eine vertikale Zustellbewegung möglich ist, kann wie vorbeschrieben mit einem Abrichtwerkzeug in Topfform der Poliermittelträger des Polierwerkzeugs abgerichtet werden. Anschließend werden die beiden unteren Spindeln quer verfahren, so daß das Aufnahmefutter mit der Linse unter das Polierwerkzeug gelangt und ohne Umspannen des Polierwerkzeugs die Linse bearbeitet werden kann.

Problematisch dabei ist, daß eine derartige Kombination aus Abrichtmaschine und Poliermaschine Bewegungen in zusätzlichen Achsen ausführen muß, was nur durch zusätzliche Einrichtungen und Steuerung erreicht werden kann. Derartige Maschinen sind somit aufwendig und teuer. Die Querbewegung der beiden unteren Spindeln muß zudem mit äußerster Präzision erfolgen, damit sich hierbei keine Ungenauigkeiten ergeben, die das Arbeitsergebnis beeinflussen würden. Die Positionswechsel der separat geführten Werkzeuge (Abrichtwerkzeug und Spannwerkzeug für Linse) führen allerdings zwangsläufig zu Ungenauigkeiten und Fehlern in den Linsengeometrien.

Ziel der Erfindung ist es, den Poliervorgang für Linsen weiter zu verbessern. Insbesondere soll die Genauigkeit der Linsengeometrie erhöht und das Polierverfahren insgesamt vereinfacht werden. Ferner soll der Maschinen- und Kostenaufwand für das Polieren von Linsen reduziert werden.

Hauptmerkmale der Erfindung sind im kennzeichnenden Teil der Ansprüche 1, und 15 angegeben. Ausgestaltungen sind Gegenstand der Ansprüche 2 bis 14 und 16 bis 18.

Als Lösung sieht die Erfindung laut Anspruch 1 vor, daß bei einer Halterung für optische Linsen mit einem zylindrischen Grundkörper, einer daran gehalterten elastischen Linsenstützfläche sowie einem zentrischen, den Grundkörper axial durchsetzenden Kanal, der Grundkörper als Abrichtwerkzeug für ein Linsenpolierwerkzeug ausgebildet ist. Dadurch ist es möglich, das Polierwerkzeug mit Hilfe der Linsenhalterung unmittelbar in der Poliermaschine abzurichten. Ein Werkzeugwechsel ist nicht erforderlich, was den Poliervorgang und die Handhabung der Poliermaschine erheblich vereinfacht. Der Abrichtvorgang findet - ebenso wie der Poliervorgang - auf ein und derselben Maschine statt, die nur noch über zwei Antriebsspindeln verfügen muß: eine erste für das Polierwerkzeug und eine zweite für die Linsenhalterung mit dem Abrichtwerkzeug. Die Maschinenkosten und auch der Steuerungsaufwand sind erheblich reduziert. Durch den Wegfall unnötiger Werkzeugwechsel wird darüber hinaus eine deutliche Steigerung der Linsenqualität erzielt. Ungenauigkeiten beim Positionswechsel oder beim Umspannen der Werkzeuge fallen vollständig weg.

Gemäß Anspruch 2 ist der Grundkörper ein Topfwerkzeug, was dank gut beherrschbarer Geometrie einen präzisen und kostengünstigen Abrichtvorgang ermöglicht.

Anspruch 3 sieht vor, daß auf dem Grundkörper ein Ringelement festlegbar ist, das An- und/oder Auflageflächen für eine Linse aufweist. Mit dem als Topfwerkzeug ausgebildeten Grundkörper kann zunächst der Abrichtvorgang des Polierwerkzeugs durchgeführt werden, wobei die Zuführung des Topfwerkzeugs einfach über dessen Spindelführung erfolgt. Anschließend kann man die zu bearbeitende Linse mit Hilfe des Ringelements auf den Grundkörper aufsetzen und den eigentlichen Poliervorgang durchführen. Das Aufsetzen des Ringelements und das Einsetzen der Linse erfordert nur wenige Handgriffe. Damit die Linse sicher gefaßt ist, tragen die An- und/oder Auflageflächen des Ringelements laut Anspruch 4 Mitnehmerelemente, die formschlüssig an einer aufgesetzten Linse anliegen. Auf diese Weise wird die Drehbewegung der Spindel zuverlässig auf die Linse übertragen, die exakt konzentrisch zur Spindelachse ausgerichtet ist. Die in der Halterung vorgesehene Linsenstützfläche sorgt für eine optimale Anlage der Linse an dem Polierwerkzeug.

In der Ausbildung von Anspruch 5 ist das Ringelement eine Linsenhalterung, die das Topfwerkzeug übergreift. Letzteres wird damit vor Staubablagerungen und/oder Beschädigungen geschützt; es kann nicht oder nur gering verschmutzen. Dies hat zur Folge, daß beim Abnehmen des Ringelements und der Linse keine Reinigungsarbeiten durchgeführt werden müssen, so daß keine unnötigen Unterbrechungen entstehen. Der Poliervorgang verläuft äußerst rationell.

Um auch während des Poliervorgangs kleinere Veränderungen oder Korrekturen an dem Polierwerkzeug vornehmen zu können, sind laut Anspruch 6 an dem Ringelement Abrichtelemente vorgesehen. Diese kommen unmittelbar beim Polieren zum Einsatz und gleichen Fehler in der Poliermittelgeometrie sofort aus.

Wichtig ist die Maßnahme von Anspruch 7, wonach das Ringelement den Grundkörper satt anliegend umschließt. Damit ist sichergestellt, daß die Linsenhalterung und die darin eingesetzte Linse stets exakt zur Spindelachse ausgerichtet sind. Der beim Wechsel der Linsenhalterung auftretende Positionsfehler ist äußerst gering, was sich günstig auf das Arbeitsergebnis aufwirkt.

Anspruch 8 gewährleistet eine einfache und rasche Montage des Ringelements, das mit einem Bajonettverschluß an dem Grundkörper festgelegt ist. Alternativ kann das Ringelement laut Anspruch 9 mit einem Schraubgewinde oder gemäß Anspruch 10 mit einer Klemmverbindung an dem Grundkörper befestigt werden. Es kann in jedem Fall zusammen mit dem Abrichtwerkzeug in einem einzigen Werkzeug vereinigt werden, wodurch das Umspannen des Polierwerkzeugs von der Poliermaschine auf eine Abrichtmaschine gänzlich entfällt. Grundkörper und Linsenhalterung bilden somit ein Kombiwerkzeug, das beispielsweise auf einer herkömmlichen Poliermaschine eingesetzt werden kann. Kosten für eine separate Abrichtmaschine fallen dann gar nicht erst an. Ungenauigkeiten durch Positionier- und und Spannvorgänge zwischen den Maschinen entfallen ebenfalls vollständig.

Konstruktiv ist es günstig, wenn die elastische Linsenstützfläche, beispielsweise eine Gummimembran, nach Anspruch 11 mittels einer auf dem Grundkörper befestigten Membranhalterung luftdicht verankert ist, wobei die Membranhalterung gemäß Anspruch 12 einen an den Kanal im Grundkörper anschließenden zentrischen Durchgangskanal aufweist.

Eine Kombination einer Halterung mit einer für Linsenhalterung zeichnet sich erfindungsgemäß laut Anspruch 13 dadurch aus, daß die Linsenhalterung lösbar an dem Abrichtwerkzeug festlegbar ist. Die Linsenhalterung bietet der Linse optimalen Halt und kann jederzeit für eine Korrektur des Poliermittelträgers abgenommen werden.

In Einklang mit Anspruch 14 ist das Abrichtwerkzeug, z.B. ein Topfwerkzeug, an einer Werkzeugspindel einer Polier- oder Abrichtmaschine befestigt. Folglich ist für den Polier- und Abrichtvorgang insgesamt nur noch eine einzige Maschine mit zwei Maschinenspindeln erforderlich, was unter anderem den Steuerungs- und Kostenaufwand drastisch reduziert. Man kann das Polierwerkzeug zunächst abrichten und anschließend mit ein und derselben Maschine die Linse polieren, ohne daß durch einen Positionswechsel der Werkzeuge Ungenauigkeiten in der Linsengeometrie entstehen.

Bei einem Verfahren zum Erzeugen hochpräziser Linsengeometrien unter Verwendung einer achsgesteuerten Maschine mit einer Linsenhalterung zur drehfesten Aufnahme einer zu polierenden Linse, mit einem an einer rotierenden Werkzeugspindel befestigten Polierwerkzeug zum Polieren der Linsenoberfläche und mit einem Abrichtwerkzeug zum Abrichten des Polierwerkzeugs, wird laut Anspruch 15 das Polierwerkzeug mit dem Abrichtwerkzeug abgerichtet, anschließend die Linsenhalterung auf das Abrichtwerkzeug aufgesetzt und die darin gehalterte Linse mit dem abgerichteten Polierwerkzeug poliert. Der gesamte Poliervorgang findet somit auf einer einzigen Maschine bzw. auf einer einzigen Maschinenspindel statt. Werkzeugwechsel oder Maschinenwechsel fallen vollständig weg, was den Poliervorgang erheblich beschleunigt.

Indem man ferner nach Anspruch 16 das Abrichtwerkzeug und die Linsenhalaterung an einer gemeinsamen, rotierenden Maschinenspindel festlegt, kann dieses kombinierte Werkzeug sowohl für den Poliervorgang als auch für den Abrichtvorgang fest montiert bleiben, was den gesamten Arbeitsablauf erheblich vereinfacht. Querbewegungen des Abrichtwerkzeugs und auch der Linsenhalte-rung finden nicht mehr statt, so daß die dabei auftretenden Positionierfehler vollständig entfallen. Vielmehr lassen sich mit einer vereinfachten Maschinenanordnung hochpräzise Linsengeometrien äußerst rationell erzeugen. Weil unnötige Maschinenbewegungen entfallen, ist das erfindungsgemäße Verfahren besonders wirtschaftlich. Zu hoher Genauigkeit trägt bei, daß die Linse gemäß Anspruch 17 während des Poliervorgangs von einer innerhalb des Abrichtwerkzeugs angeordneten elastischen Linsenstützfläche gleichmäßig an das Polierwerkzeug angedrückt wird.

Mit Vorteil wird das Polierwerkzeug gemäß Anspruch 18 während des Poliervorgangs abgerichtet und/oder korrigiert, nämlich unabhängig vom Abrichtwerkzeug mittels zusätzlicher Abrichtelemente auf der Linsenhalterung. Kleine Fehler in der Werkzeuggeometrie lassen sich daher sofort beheben, quasi im Online-Betrieb, beheben.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Querschnittsansicht einer Linsenhalterung ohne Ringelement,
- Fig. 2: eine Querschnittsansicht einer Linsenhalterung mit aufgesetztem Ringelement und
- Fig. 3: eine Querschnittsansicht eines anderen Ausführungsbeispiels einer Linsenhalterung.

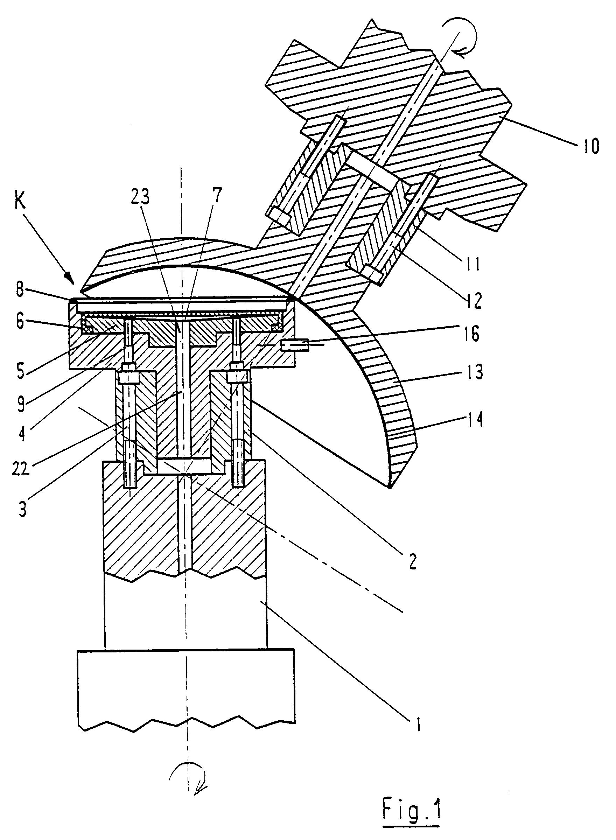

Die in Fig. 1 dargestellte Halterung für optische Linsen ist in einer (nicht gezeigten) Poliermaschine montiert und befindet sich im Abrichtbetrieb. Eine Werkzeugspindel 1 der Poliermaschine trägt an ihrem oberen Ende einen Adapter 2, der mittels Schrauben 3 an der Spindel 1 befestigt ist. Mit dem Adapter 2 ist ein Grundkörper 4 verbunden, der an seinem oberen Rand Arbeitsflächen 8 aufweist. Er bildet damit ein Abrichtwerkzeug in Form eines Topfwerkzeugs.

In der inneren zylindrischen Ausnehmung des Topfwerkzeugs 4 ist in an sich bekannter Weise ein Membranhalter 5 angeordnet, der mittels Schrauben 9 an dem Topfwerkzeug 4 festgelegt ist. Er besitzt mittig eine muldenförmige Vertiefung 7 und hält eine Gummimembran 6, die mit einem Befestigungsrand luftdicht auf dem Topfwerkzeug 4 aufsitzt. Topfwerkzeug 4 und Membranhalter 5 sind ferner mit einer zentrischen Durchgangsbohrung 22 bzw. 23 versehen, die innerhalb der Spindel 1 mit einem (nicht gezeigten) Druckluftanschluß verbunden ist. Das obere Ende der Durchgangsbohrung 23 in dem Membranhalter endet unterhalb der Gummimembran 6 in einem von der muldenförmigen Vertiefung 7 und der Membran 6 gebildeten Hohlraum.

Eine Polierspindel 10 der Poliermaschine ist - entsprechend den geometrischen Daten einer zu fertigenden Linse 19 - zur Werkzeugspindel 1 ausgerichtet und trägt einen Adapter 11, der mittels Schrauben 12 an der Polierspindel 10 verschraubt ist. An dem Adapter 11 ist ein Polierwerkzeug 13 mit einem Poliermittelträger 14 befestigt, der in seiner inneren Ausnehmung die Form einer Kugelkalotte hat. Der Poliermittelträger 14 wird mit dem in Anlage befindlichen Abrichtwerkzeug 4 über eine (ebenfalls nicht dargestellte) Maschinensteuerung bearbeitet bzw. anhand von Geometriedaten korrigiert.

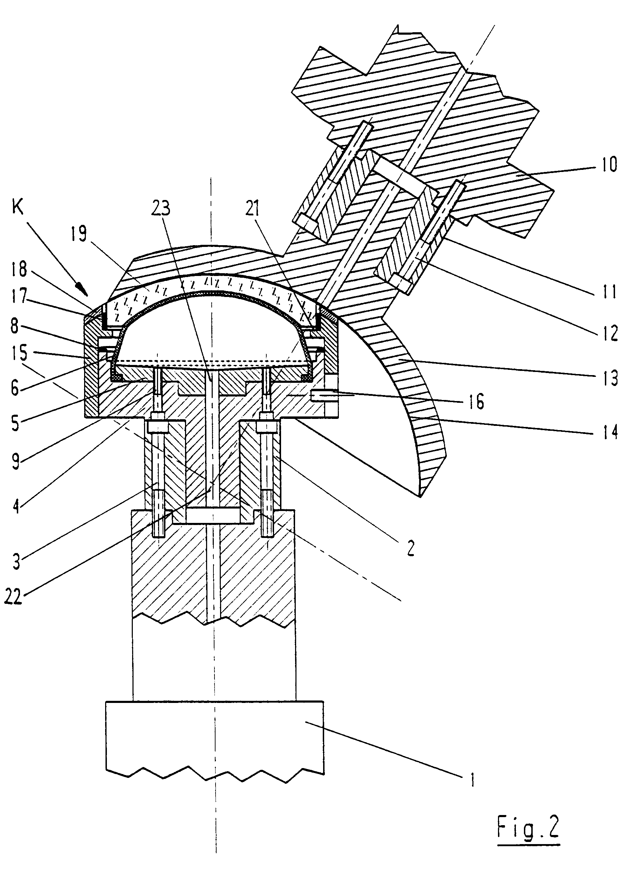

In Fig. 2 ist auf das Topfwerkzeug 4 ein Ringelement 15 paßgenau aufgesteckt, das einen Bajonettverschluß aufweist und von seitlichen Bolzen 16 exakt in Position gehalten wird. Entlang seiner Innenseite hat das Ringelement 15 eine Auflagefläche 21, auf der eine zu bearbeitende Linse 19 konzentrisch aufgesetzt ist.

Die Auflagefläche 21 kann durchgehend ausgebildet sein oder durchbrochen. Wichtig ist, daß sie eine ebene Fläche bildet, damit die Linse exakt gerade gehalten wird. Um die Drehbewegung der Maschinenspindel 1 über das als Linsenhalterung ausgebildete Ringelement 15 auf die Linse 19 zu übertragen, sind über der Auflagefläche 21 Mitnehmerelemente 17 vorgesehen. Dabei handelt es sich beispielsweise um elastische Nasenvorsprünge, die form- und kraftschlüssig an den Seiten des Linsenkörpers 19 anliegen, so daß die Linse konzentrisch in dem Ring 15 gehalten ist und beim Aufsetzen des Polierwerkzeugs 13 nicht durchdreht. An ihrer Oberseite trägt die Linsenhalterung 15 zusätzliche Abrichtelemente 18, die es gestatten, unabhängig von dem Topfwerkzeug 4 feinste Korrekturen an dem Polierwerkzeug 13 vorzunehmen und damit höchste Linsenqualitäten zu erzielen.

Das Topfwerkzeug 4, der Membranhalter 5 und die Membran 6 bilden in Verbindung mit der Linsenhalterung 15 ein Kombiwerkzeug K. Dieses ist an nur einer Spindel 1 einer Poliermaschine montiert und dient sowohl zum Polieren einer beliebigen Linse 19 als auch zum Abrichten des dazu verwendeten Polierwerkzeugs 13. Der Poliervorgang und der Abrichtvorgang finden somit in derselben Maschine statt; Werkzeugwechsel sind weder notwendig noch finden sie statt.

Zum Abrichten des Polierwerkzeugs 13 werden zunächst das Polierwerkzeug 13 an der Spindel 10 und das Kombiwerkzeug K ohne die Linsenhalterung 15 an der Spindel 1 montiert. Anschließend werden die Spindeln 1, 10 zueinander ausgerichtet und der Abrichtvorgang in bekannter Art und Weise durch Zustellen des Werkzeugs 4 durchgeführt.

Nach Beendigung des Abrichtvorgangs wird die Spindel 1 mit dem Kombiwerkzeug K zurückgefahren, wobei lediglich eine axiale Verschiebung und keine Querbewegung der Spindel 1 erfolgt. Der Linsenhalter 15 wird auf das Topfwerkzeug 4 aufgesetzt und an den Bolzen 16 festgelegt. Durch die paßgenaue Ausbildung von Topfwerkzeug 4 und Linsenhalterung 15 sitzt diese exakt zentrisch auf, so daß kein seitlicher Positionsfehler entsteht. Anschließend legt man die zu bearbeitende Linse 19 in die Halterung 15 ein und führt die Linse 19 über die Spindel 1 an das Polierwerkzeug 13 heran. Nach dieser Zustellbewegung wird die Gummimembran 6 über die koaxiale Bohrung 22 mit Druckluft beaufschlagt. Dabei legt sie sich formschlüssig an der Unterseite der Linse 19 an und drückt diese mit gleichmäßigem Druck gegen die Oberfläche des Poliermittelträgers 14. Nach Zugabe von Poliermittel kann der Poliervorgang in gewohnter Weise ablaufen. Die Linse 19 wird dabei sowohl von den Mitnehmerelementen 17 als auch von der Gummimembran 6 in Drehbewegung versetzt. Durch die Drehung der beiden Spindeln 1, 10 und die daraus resultierende Relativbewegung zwischen Poliermittelträger 14 und Linse 19 wird von dem aufgegebenen (nicht sichtbaren) Poliermittel der gewünschte Materialabtrag an der Linse 19 erzielt.

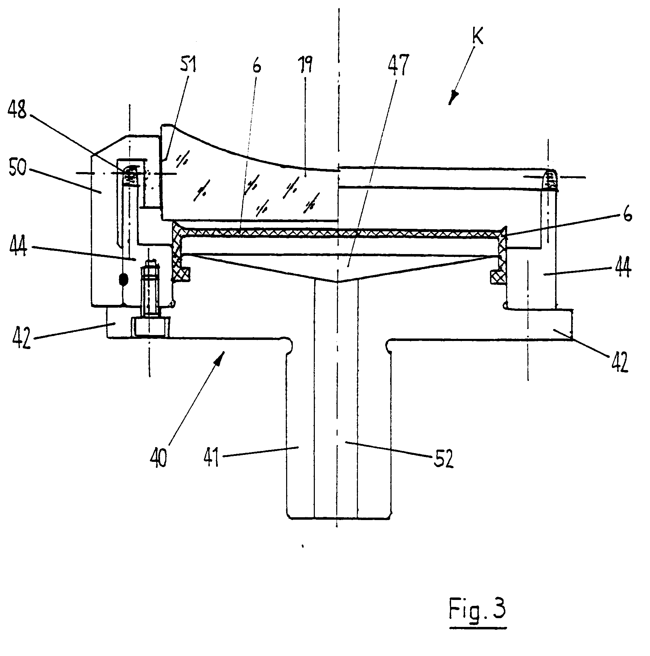

Fig. 3 zeigt ein anderes Ausführungsbeispiel einer Halterung. Das Abrichtwerkzeug 40 ist hier in zwei Teile aufgeteilt, nämlich in einen Grundkörper 41 mit einem Umfangsrand 42 und in einen darauf aufgesetzten Werzeugring 44, der an seiner Oberkante 48 als Topfwerkzeug ausgebildet ist. Zwischen dem Grundkörper 41 und dem Topfring 44 ist die Membran 6 verankert, die mit ihrem Befestigungsrand in einer Umfangsnut in dem Grundkörper 41 eingelassen ist. Unterhalb der Membran 6 besitzt der Grundkörper 41 eine Vertiefung 47 sowie eine zentrische Durchgangsbohrung 52, die in bekannter Weise mit einem (nicht dargestellten) Druckluftanschluß verbunden ist.

Um den Topfring 44 herum ist ein Ringelement 50 paßgenau aufgesetzt, das sich mit seinem unteren Ende auf dem Umfangsrand 42 des Grundkörpers 41 abstützt. Das obere Ende des Ringelements 50 umschließt die Oberkante 48 des Topfrings 44 nach innen und bildet dort eine Anlagefläche 51 für eine zu bearbeitende Linse 19. Diese wird einfach in das Ringelement 50 eingesetzt und von der Membran 6 gestützt.

Die Erfindung ist nicht auf eine der vorbeschriebenen Ausführungsformen beschränkt, sondern in vielfältiger Weise abwandelbar. So kann die Auflagefläche 21 zur Auflage der zu bearbeitenden Linse 19 unmittelbar in dem Topfwerkzeug 4, beispielsweise an dessen Innenseite, ausgebildet sein. Der Mitnehmerring 15 kann anstelle des Bajonettverschlusses auch mit einem Gewinde an dem Abrichtwerkzeug 4 befestigt sein. Denkbar sind auch andere Befestigungsarten, die ein schnelles Befestigen und Lösen des Mitnehmerrings 15 gestatten.

Man erkennt, daß eine Halterung für die Präzisionsbearbeitung optischer Linsen einen zylindrischen, als Abrichtwerkzeug ausgebildeten Grundkörper 4, eine auf diesem befestigte Membranhalterung 5, eine daran luftdicht gehalterte elastische Membran 6 sowie einen zentrischen, den Grundkörper 4 und den Membranhalter 5 axial durchsetzenden Kanal 22, 23 hat. Das Abrichtwerkzeug 4 ist bevorzugt ein Topfwerkzeug, auf dem ein Ringelement 15 übergreifend festlegbar ist. Letzteres hat als Linsenaufnahme An- und/oder Auflageflächen 21 sowie Mitnehmerelemente 17 zur Aufnahme einer zu bearbeitenden Linse 19; es kann ferner zusätzliche Abrichtelemente 18 haben. Das Abrichtwerkzeug 4 und die Linsenhalterung 15 sind zu einem Kombiwerkzeug K kombiniert, das an einer gemeinsamen, rotierenden Maschinenspindel 1 festlegbar ist. Man richtet zuerst ein Polierwerkzeug 13 mit dem Topfwerkzeug 4 ab, setzt auf dieses die Linsenhalterung 15 auf und poliert die darin gehalterte Linse 19 mit dem nunmehr abgerichteten Polierwerkzeug 13, an das die Linse 19 mit der Membran 6 gleichmäßig angedrückt wird.

### Bezugszeichenliste

- K: Kombiwerkzeug
- 1: Werkzeugspindel
- 2: Adapter
- 3: Schraube
- 4: Grundkörper/Topfwerkzeug
- 5: Membranhalter
- 6: Membran
- 7: Vertiefung
- 8: Arbeitsfläche
- 9: Schraube
- 10: Polierspindel
- 11: Adapter
- 12: Schraube
- 13: Polierwerkzeug
- 14: Poliermittelträger
- 15: Ringelement/Linsenhalter
- 16: Bolzen
- 17: Mitnehmerelement
- 18: Abrichtelement
- 19: Linse
- 21: Auflagefläche
- 22, 23: Durchgangsbohrung
- 40: Abrichtwerkzeug
- 41: Grundkörper
- 42: Umfangsrand
- 44: Werzeugring
- 47: Vertiefung
- 48: Oberkante
- 50: Ringelement
- 51: Anlagefläche
- 52: Durchgangsbohrung

## Patentansprüche

1. Halterung für optische Linsen mit einem zylindrischen Grundkörper (4), einer daran gehalterten elastischen Linsenstützfläche (6) sowie einem zentrischen, den Grundkörper (4) axial durchsetzenden Kanal (22), dadurch **gekennzeichnet,** daß der Grundkörper (4) als Abrichtwerkzeug für ein Linsenpolierwerkzeug (13) ausgebildet ist.

2. Halterung nach Anspruch 1, dadurch **gekennzeichnet**, daß der Grundkörper (4) ein Topfwerkzeug ist.

3. Halterung nach Anspruch 1 oder 2, dadurch **gekennzeichnet,** daß auf dem Grundkörper (4) ein Ringelement (15) festlegbar ist, das Anund/oder Auflageflächen (21) für eine Linse (19) aufweist.

4. Halterung nach Anspruch 3, dadurch **gekennzeichnet,** daß die Anund/oder Auflageflächen (21) des Ringelements (15) Mitnehmerelemente (17) tragen, die formschlüssig an einer aufgesetzten Linse (19) anliegen.

5. Halterung nach Anspruch 3 oder 4, dadurch **gekennzeichnet**, daß das Ringelement (15) als Linsenhalterung das Topfwerkzeug (4) übergreift.

6. Halterung nach einem der Ansprüche 3 bis 5, dadurch **gekennzeichnet,** daß an dem Ringelement (15) Abrichtelemente (18) vorgesehen sind.

7. Halterung nach einem der Ansprüche 3 bis 6, dadurch **gekennzeichnet,** daß das Ringelement (15) den Grundkörper (4) satt anliegend umschließt.

8. Halterung nach einem der Ansprüche 3 bis 7, dadurch **gekennzeichnet,** daß das Ringelement (15) mit einem Bajonettverschluß an dem Grundkörper (4) festgelegt ist.

9. Halterung nach einem der Ansprüche 3 bis 7, dadurch **gekennzeichnet,** daß das Ringelement (15) mit einem Schraubgewinde an dem Grundkörper (4) festgelegt ist.

10. Halterung nach einem der Ansprüche 3 bis 7, dadurch **gekennzeichnet,** daß das Ringelement (15) mit einer Klemmverbindung an dem Grundkörper (4) festgelegt ist.

11. Halterung nach einem der Ansprüche 1 bis 10, dadurch **gekennzeichnet,** daß die elastische Linsenstützfläche (6), beispielsweise eine Gummimembran, mittels einer auf dem Grundkörper (4) befestigten Membranhalterung (5) luftdicht verankert ist.

12. Halterung nach Anspruch 11, dadurch **gekennzeichnet,** daß die Membranhalterung (5) einen an den Kanal (22) im Grundkörper (4) anschließenden zentrischen Durchgangskanal (23) aufweist.

13. Kombination einer Halterung nach Anspruch 1 oder 2 mit mit einer Linsenhalterung, dadurch **gekennzeichnet,** daß die Linsenhalterung lösbar an dem Abrichtwerkzeug (4) festlegbar ist.

14. Halterung nach Anspruch 13, dadurch **gekennzeichnet,** daß das Abrichtwerkzeug (4), z.B. ein Topfwerkzeug, an einer Werkzeugspindel (1) einer Polier- oder Abrichtmaschine befestigt ist.

15. Verfahren zum Erzeugen hochpräziser Linsengeometrien unter Verwendung einer achsgesteuerten Maschine mit einer Linsenhalterung (15) zur drehfesten Aufnahme einer zu polierenden Linse (19), mit einem an einer rotierenden Werkzeugspindel (10) befestigten Polierwerkzeug (13) zum Polieren der Linsenoberfläche und mit einem Abrichtwerkzeug (4) zum Abrichten des Polierwerkzeugs (13), dadurch **gekennzeichnet** daß man das Polierwerkzeug (13) mit dem Abrichtwerkzeug (4) abrichtet, anschließend die Linsenhalterung (15) auf das Abrichtwerkzeug (4) aufsetzt und die darin gehalterte Linse (19) mit dem abgerichteten Polierwerkzeug (13) poliert.

16. Verfahren nach Anspruch 15, dadurch **gekennzeichnet,** daß man das Abrichtwerkzeug (4) und die Linsenhalterung (15) an einer gemeinsamen, rotierenden Maschinenspindel (1) festlegt`

17. Verfahren nach Anspruch 15 oder 16, dadurch **gekennzeichnet,** daß die Linse (19) während des Poliervorgangs von einer innerhalb des Abrichtwerkzeugs (4) angeordneten elastischen Linsenstützfläche (6) gleichmäßig an das Polierwerkzeug (13) andrückt wird.

18. Verfahren nach einem der Ansprüche 15 bis 17, dadurch **gekennzeichnet,** daß das Polierwerkzeug (13) während des Poliervorgangs unabhängig vom Abrichtwerkzeug (4) mittels zusätzlicher Abrichtelemente (18) auf der Linsenhalterung (15) abgerichtet und/oder korrigiert wird.

## Claims

1. Holder for optical lenses, comprising a cylindrical base (4), an elastic lens support surface (6) attached thereto as well as a centric duct (22) crossing the base (4) axially, **wherein** the base (4) is designed as dressing tool for a lens polishing tool (13).

2. Holder according to claim 1, **wherein** the base (4) is a cup-shaped tool.

3. Holder according to claim 1, **wherein** a ring element (15) that includes banking and/or supporting surfaces (21) for a lens (19) is mountable onto the base (4).

4. Holder according to claim 3, **wherein** the banking and/or supporting surfaces (21) of the ring element (15) support engaging elements (17) which positively bear against a mounted lens (19).

5. Holder according to claim 3 or claim 4, **wherein** the cup-shaped tool (4) is capped by the ring element (15) which constitutes the lens holder.

6. Holder according to any one of claims 3 to 5, **wherein** dressing elements (18) are provided on the ring element (15).

7. Holder according to any one of claims 3 to 6, **wherein** the ring element (15) snugly encloses the base (4).

8. Holder according to any one of claims 3 to 7, **wherein** the ring element (15) is fastened to the base (4) by means of a bayonet joint.

9. Holder according to any one of claims 3 to 7, **wherein** the ring element (15) is fastened to the base (4) by means of a screw thread.

10. Holder according to any one of claims 3 to 7, **wherein** the ring element (15) is fastened to the base (4) by means of a clamping device.

11. Holder according to any one of claims 1 to 10, **wherein** the elastic lens supporting surface (6), e.g. a rubber diaphragm, is anchored air-tight by means of a diaphragm holder (5) attached to the base (4).

12. Holder according to claim 11, **wherein** the diaphragm holder (5) comprises a centric through-duct (23) joining a duct (22) in base (4).

13. Combination of a holder according to claim 1 or claim 2 with a lens holder, **wherein** the lens holder (15) is detachably fastened to the dressing tool (4).

14. Holder according to claim 13, **wherein** the dressing tool (4), e.g. a cup-shaped tool, is fastened to a tool spindle (1) of a polishing or dressing machine.

15. Method of producing high-precision lens geometries, using an axis-controlled machine with a lens holder (15) for rotationally firm mounting of a lens (19) to be polished, comprising a polishing tool (13) fastened to a rotating tool spindle (10) for polishing the lens surface and comprising a dressing tool (4) for dressing the polishing tool (13), **wherein** the polishing tool (13) is dressed by means of the dressing tool (4) whereupon the lens holder (15) is mounted to the dressing tool (4) and the lens (19) held therein is polished by means of the dressed polishing tool (13).

16. Method according to claim 15, **wherein** the dressing tool (4) and the lens holder (5) are fastened to a common rotating machine spindle (1).

17. Method according to claim 15, **wherein** during the polishing procedure, the lens (19) is uniformly pressed against the polishing tool (13) by means of an elastic support surface (6) provided within the dressing tool (4).

18. Method according to any one of claims 15 to 17, **wherein** independently of the dressing tool (4), the polishing tool (13) is dressed and/or corrected during the polishing procedure by means of additional dressing tools (18) on the lens holder (15).

## Revendications

1. Support pour lentille optique avec un corps de base cylindrique (4), avec une surface élastique d'appui (6) de la lentille fixée sur celui-ci, et avec un canal central (22) traversant axialement le corps de base (4), **caractérisé** en ce que le corps de base (4) a été conçu en tant qu'outil de dressage pour un outil de polissage (13) de lentilles.

2. Support selon la revendication 1, **caractérisé** en ce que le corps de base (4) est un outil boisseau.

3. Support selon la revendication 1 ou 2, **caractérisé** en ce qu'un élément annulaire (15), qui présente des surfaces de contact et/ou d'appui (21) pour une lentille (19), peut être fixé sur le corps de base (4).

4. Support selon la revendication 3, **caractérisé** en ce que les surfaces de contact et/ou d'appui (21) de l'élément annulaire (15) portent des éléments d'entraînement (17), qui sont en contact solidaire de forme avec une lentille (19) placée dessus.

5. Support selon la revendication 3 ou 4, **caractérisé** en ce que l'élément annulaire (15), en tant que support de lentille, chevauche sur l'outil boisseau (4).

6. Support selon l'une des revendications 3 à 5, **caractérisé** en ce que des éléments de dressage (18) sont prévus sur l'élément annulaire (15).

7. Support selon l'une des revendications 3 à 6, **caractérisé** en ce que l'élément annulaire (15) enserre le corps de base (4) avec un contact étroit.

8. Support selon l'une des revendications 3 à 7, **caractérisé** en ce que l'élément annulaire (15) est fixé au corps de base (4) par un verrouillage à baïonnette.

9. Support selon l'une des revendications 3 à 7, **caractérisé** en ce que l'élément annulaire (15) est fixé au corps de base (4) au moyen d'un filet de vis.

10. Support selon l'une des revendications 3 à 7, **caractérisé** en ce que l'élément annulaire (15) est fixé au corps de base (4) au moyen d'un accouplement par serrage.

11. Support selon l'une des revendications 1 à 10, **caractérisé** en ce que la surface élastique d'appui (6) de la lentille, par exemple une membrane en caoutchouc, est ancrée hermétiquement au moyen d'un porte-membrane (5) fixé sur le corps de base (4).

12. Support selon la revendication 11, **caractérisé** en ce que le porte-membrane (5) présente un canal central de passage (23) qui se rattache au canal (22) du corps de base (4).

13. Combinaison d'un support selon la revendication 1 ou 2 avec un support de lentille, **caractérisé** en ce que le support de lentille peut être fixé à l'outil de dressage (4) de manière amovible.

14. Support selon la revendication 13, **caractérisé** en ce que l'outil de dressage (4), par exemple un outil boisseau, est fixé à une broche porte-outil (1) d'une machine de polissage ou de dressage.

15. Procédé pour produire des géométries de lentille de haute précision en utilisant une machine à commande axiale avec un support de lentille (15) pour recevoir de manière rotativement fixe une lentille à polir (19), avec un outil de polissage (13) fixé à une broche porte-outil rotative (10) pour polir la surface de la lentille, et avec un outil de dressage (4) pour dresser l'outil de polissage (13), **caractérisé** en ce que l'on dresse l'outil de polissage (13) avec l'outil de dressage (4), que l'on place ensuite le support de lentille (15) sur l'outil de dressage (4) et que l'on polit la lentille (19) qui y est placée avec l'outil de polissage (13) dressé.

16. Procédé selon la revendication 15, **caractérisé** en ce que l'on fixe l'outil de dressage (4) et le support de lentille (15) à une broche porte-outil rotative commune (1).

17. Procédé selon la revendication 15 ou 16, **caractérisé** en ce que pendant le polissage, la lentille (19) est pressée de façon régulière contre l'outil de polissage (13) par une surface élastique d'appui de la lentille (6) disposée à l'intérieur de l'outil de dressage (4).

18. Procédé selon l'une des revendications 15 à 17, **caractérisé** en ce que l'outil de polissage (13) est dressé et/ou corrigé pendant le polissage, indépendamment de l'outil de dressage (4), au moyen d'éléments de dressage supplémentaires (18) sur le support de lentille (15).
